# EUROPEAN PATENT APPLICATION

(11) **EP 3 656 605 A1**
(43) Date of publication of application: **27.05.2020**
(21) Application number: 19205259.5
(22) Date of filing: 25.10.2019
(51) Int. Cl.: B60L 58/20, B60L 3/00, B60W 50/02, H02J 1/08

(54) **POWER SUPPLY SYSTEM**

(30) Priority: 20.11.2018 JP 2018217047
(71) Applicant: YAZAKI CORPORATION, Minato-ku, Tokyo 108-8333 (JP)
(72) Inventor: SUZUKI, Shingo, Susono-shi, Shizuoka 410-1194 (JP); ITO, Satoshi, Susono-shi, Shizuoka 410-1194 (JP)
(74) Representative: Grünecker Patent- und Rechtsanwälte PartG mbB

(57) **Abstract**

In the power supply system (1, 1A, 1B), a high-voltage battery (20) supplies electric power to a main M/G (2) that generates a driving force for causing a vehicle (100) to travel. A 48 V battery (30) is a battery with a different voltage from that of the high-voltage battery (20), and supplies electric power to a traveling system actuator (3) being different from the main M/G 2 and configured to adjust behavior of the vehicle (100) while traveling. A 12 V battery (40) is a battery with a different voltage from that of the high-voltage battery (20) and the 48 V battery (30), and supplies electric power to ECUs (5) the driving voltage of which is lower than that of the traveling system actuator (3). A DC/DC converter (50) converts voltage. Supply voltage of the 48 V battery (30) is lower than that of the high-voltage battery (20), and higher than that of the 12 V battery (40).

## Description

### BACKGROUND OF THE INVENTION

### 1. Field of the Invention

The present invention relates to a power supply system.

### 2. Description of the Related Art

Conventionally, for example, Japanese Patent Application Laid-open No. 2017-114253 discloses an electricity distribution system including a battery for traveling that drives a motor for causing a vehicle to travel, and a direct current to direct current (DC/DC) converter that steps down the voltage of the battery for traveling to different first and second voltages and that supplies electric power of the first and second voltages to different loading units. For example, the DC/DC converter supplies electric power of the first voltage in which the voltage (200 V) of the battery for traveling is stepped down to 12 V, to a general load. The DC/DC converter also supplies electric power of the second voltage in which the voltage (200 V) of the battery for traveling is stepped down to 24 V, to a heater.

For example, in the electricity distribution system disclosed in Japanese Patent Application Laid-open No. 2017-114253 described above, there is still room for improvement in the configuration of the power supply system for supplying electric power with different voltages to a plurality of loading units including a traveling driving force generation source and a traveling system actuator.

### SUMMARY OF THE INVENTION

Therefore, the present invention has been made in view of the above, and an object of the present invention is to provide a power supply system that can suitably configure a plurality of power supply systems with different voltages.

In order to solve the above mentioned problem and achieve the object, a power supply system according to one aspect of the present invention includes a first power supply system that supplies electric power to a main driving force generation source that generates a driving force for causing a vehicle to travel; a second power supply system that is a power supply system with a different voltage from that of the first power supply system, and that supplies electric power to a traveling system actuator being different from the main driving force generation source and configured to adjust behavior of the vehicle while traveling; a third power supply system that is a power supply system with a different voltage from that of the first power supply system and the second power supply system, and that supplies electric power to an electric component a driving voltage of which is lower than that of the traveling system actuator; and a DC/DC converter that converts voltage supplied from one power supply system of the first power supply system, the second power supply system, and the third power supply system, and that outputs the converted voltage to another power supply system of the first power supply system, the second power supply system, and the third power supply system, wherein supply voltage of the second power supply system is lower than that of the first power supply system, and higher than that of the third power supply system.

According to another aspect of the present invention, in the power supply system, it is preferable that the second power supply system supplies electric power to a sub-driving force generation source that is different from the traveling system actuator, that is a driving force generation source for generating a driving force for causing the vehicle to travel, and a driving voltage of which for driving the vehicle is lower than that of the main driving force generation source.

According to still another aspect of the present invention, in the power supply system, it is preferable that the second power supply system supplies electric power to the sub-driving force generation source, when there is an abnormality in the first power supply system.

According to still another aspect of the present invention, in the power supply system, it is preferable that the sub-driving force generation source is capable of supplying regenerative power obtained by converting rotation energy of a driving wheel of the vehicle to electric energy when the vehicle is decelerated, when there is no abnormality in the DC/DC converter, the second power supply system charges an electrical storage device with the regenerative power supplied from the sub-driving force generation source, and supplies electric power to the third power supply system via the DC/DC converter, and when there is an abnormality in the DC/DC converter, the second power supply system charges the electrical storage device with the regenerative power supplied from the sub-driving force generation source, and does not supply electric power to the third power supply system via the DC/DC converter.

According to still another aspect of the present invention, in the power supply system, it is preferable that when there is no abnormality in the second power supply system, the first power supply system does not supply electric power to the traveling system actuator, and when there is an abnormality in the second power supply system, the first power supply system supplies electric power to the traveling system actuator via the DC/DC converter, and when there is no abnormality in the third power supply system, the first power supply system does not supply electric power to the electric component, and when there is an abnormality in the third power supply system, the first power supply system supplies electric power to the electric component via the DC/DC converter.

According to still another aspect of the present invention, in the power supply system, it is preferable that a plurality of the DC/DC converters are provided, the DC/DC converters are connected in an annular shape, and the electric component is connected to each of the DC/DC converters; and the second power supply system supplies electric power to the electric component via the DC/DC converter.

According to still another aspect of the present invention, in the power supply system, it is preferable that when there is an abnormality in the first power supply system, the traveling system actuator allows the vehicle to travel a certain distance while adjusting behavior of the vehicle while traveling, and is capable of stopping the vehicle thereafter.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of a multi-power supply system according to an embodiment;
FIG. 2 is a diagram illustrating an operation example of the multi-power supply system according to the embodiment when a vehicle is started;
FIG. 3 is a diagram illustrating an operation example of the multi-power supply system according to the embodiment when the vehicle is accelerated;
FIG. 4 is a diagram illustrating an operation example of the multi-power supply system according to the embodiment when the vehicle is traveling at a constant speed;
FIG. 5 is a diagram illustrating an operation example of the multi-power supply system according to the embodiment when the vehicle is decelerated;
FIG. 6 is a diagram illustrating an operation example of the multi-power supply system according to the embodiment when the vehicle is stopped;
FIG. 7 is a diagram illustrating an operation example of the multi-power supply system according to the embodiment when the vehicle is parked (without being externally charged);
FIG. 8 is a diagram illustrating an operation example of the multi-power supply system according to the embodiment when the vehicle is parked (while being externally charged);
FIG. 9 is a diagram illustrating an operation example of the multi-power supply system according to the embodiment when a high-voltage battery is abnormal;
FIG. 10 is a diagram illustrating an operation example of the multi-power supply system according to the embodiment when a DC/DC converter is abnormal;
FIG. 11 is a diagram illustrating an operation example of the multi-power supply system according to the embodiment when a 48 V battery and a 12 V battery are abnormal;
FIG. 12 is a block diagram illustrating a configuration example of a multi-power supply system according to a first modification of the embodiment; and
FIG. 13 is a block diagram illustrating a configuration example of a multi-power supply system according to a second modification of the embodiment.

### DETAILED DESCRIPTION OF THE PREFERRED EMBODIMENTS

A mode for carrying out the present invention (embodiment) will be described in detail with reference to the accompanying drawings. It is not intended that the present invention be limited by what has been described in the following embodiment. Moreover, components described below include components that can be easily assumed by a person skilled in the art, and components that are substantially the same as those components. Furthermore, the components described below can be combined with one another as appropriate. Still furthermore, various omissions, substitutions, or changes may be made to the configuration without departing from the spirit of the present invention.

### Embodiment

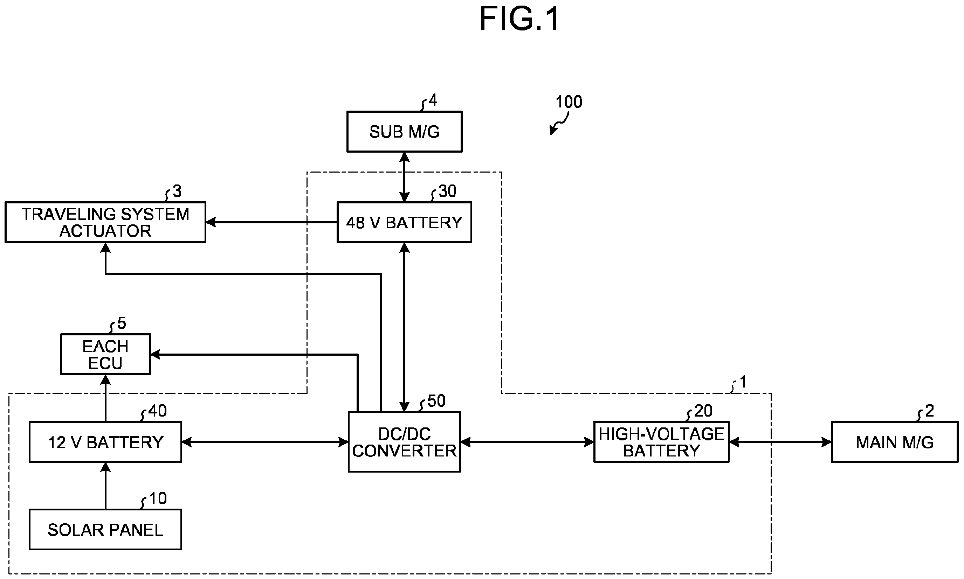

A multi-power supply system 1 serving as a multi-power supply system according to an embodiment will be described in detail with reference to the accompanying drawings. FIG. 1 is a block diagram illustrating a configuration example of the multi-power supply system 1 according to the embodiment. The multi-power supply system 1 is mounted on a vehicle 100, and supplies electric power to various components in the vehicle 100. It is assumed that the vehicle 100 is an electric vehicle, a plug-in hybrid car, or the like that has an automatic operation function. However, it is not limited thereto. As illustrated in FIG. 1, the vehicle 100 includes a main motor generator (M/G) 2 serving as a main driving force generation source, a traveling system actuator 3, a sub M/G 4 serving as a sub-driving force generation source, and a plurality of electronic control units (ECUs) 5 serving as a plurality of electrical components.

The main M/G 2 is a main motor for traveling that generates a driving force for causing the vehicle 100 to travel. For example, the main M/G 2 is connected to a drive shaft via a speed reducer, a differential gear, and the like. However, the connection structure is not limited thereto. The main M/G 2 is driven and rotated by the electric power supplied from a high-voltage battery 20, which will be described below, and causes the vehicle 100 to travel by driving a driving wheel connected to the drive shaft. In the main M/G 2, the driving voltage for driving the vehicle 100 is higher than that of the sub M/G 4.

The main M/G 2 also functions as a generator capable of supplying regenerative power that is obtained by converting the rotation energy of the driving wheel of the vehicle 100 to electric energy, when the vehicle 100 is decelerated. For example, the main M/G 2 is applied to a regenerative brake, and generates electricity when the main M/G 2 is rotated by using the driving force of the driving wheel, when the vehicle 100 is decelerated. The main M/G 2 supplies the generated regenerative power to the high-voltage battery 20.

The traveling system actuator 3 is an actuator for adjusting the behavior of the vehicle 100 while traveling. The traveling system actuator 3 differs from the main M/G 2, the sub M/G 4, and the ECUs 5. For example, the traveling system actuator 3 includes an electric stabilizer that stabilizes the behavior of the vehicle 100 while traveling, an electric power steering that supports the steering force, an electric brake that decelerates and stops the vehicle 100, and the like. The traveling system actuator 3 is driven by the electric power supplied from a 48 volt (V) battery 30, which will be described below, and adjusts the behavior of the vehicle 100 while traveling.

The sub M/G 4 is an auxiliary motor for traveling that generates a driving force for causing the vehicle 100 to travel. For example, the sub M/G 4 is connected to a drive shaft via a speed reducer, a differential gear, and the like. However, the connection structure is not limited thereto. The sub M/G 4 is driven and rotated by the electric power supplied from the 48 V battery 30, which will be described below, and causes the vehicle 100 to travel by driving the driving wheel connected to the drive shaft. In the sub M/G 4, the driving voltage for driving the vehicle 100 is lower than that of the main M/G 2.

The sub M/G 4 also functions as a generator capable of converting the rotation energy of the driving wheel of the vehicle 100 to electric energy, when the vehicle 100 is decelerated. For example, the sub M/G 4 is applied to a regenerative brake, and generates electricity when the sub M/G 4 is rotated by using the driving force of the driving wheel, when the vehicle 100 is decelerated.

Each of the ECUs 5 is a computer for controlling the vehicle 100. For example, the ECU 5 is a computer for controlling the main M/G 2, the traveling system actuator 3, the sub M/G 4, and the like. The driving voltage of the ECU 5 is lower than that of the traveling system actuator 3.

The multi-power supply system 1 supplies electric power to the main M/G 2, the traveling system actuator 3, the sub M/G 4, and the like mounted on the vehicle 100, and includes a plurality of power supply systems with different voltages. For example, the multi-power supply system 1 includes a solar panel 10, the high-voltage battery 20 serving as a first power supply system, the 48 V battery (electrical storage device) 30 serving as a second power supply system, a 12 V battery 40 serving as a third power supply system, and a direct current to direct current (DC/DC) converter 50.

The solar panel 10 photoelectrically converts the light energy of the sun to electric energy. The solar panel 10 is connected to the 12 V battery 40, and outputs the electric energy having been photoelectrically converted (electric power) to the 12 V battery 40.

The high-voltage battery 20 is a storage battery for charging and discharging electric power, and has a different supply voltage from that of the 48 V battery 30 and the 12 V battery 40. For example, the supply voltage of the high-voltage battery 20 is higher than that of the 48 V battery 30 and the 12 V battery 40. For example, the supply voltage of the high-voltage battery 20 is about 300 V to 400 V. The high-voltage battery 20 is connected to the main M/G 2, supplies electric power to the main M/G 2, and is charged with the regenerative power from the main M/G 2. The high-voltage battery 20 is connected to the 48 V battery 30 and the 12 V battery 40 via the DC/DC converter 50, and supplies electric power to the 48 V battery 30 and the 12 V battery 40. The high-voltage battery 20 is connected to the traveling system actuator 3 and the ECUs 5 via the DC/DC converter 50, and supplies electric power to the traveling system actuator 3 and the ECUs 5.

The 48 V battery 30 is a storage battery for charging and discharging electric power, and has a different supply voltage from that of the high-voltage battery 20 and the 12 V battery 40. The supply voltage of the 48 V battery 30 is lower than that of the high-voltage battery 20, and is higher than that of the 12 V battery 40. For example, the supply voltage of the 48 V battery 30 is about 48 V. The 48 V battery 30 is connected to the traveling system actuator 3, and supplies electric power to the traveling system actuator 3. The 48 V battery 30 is connected to the sub M/G 4, supplies electric power to the sub M/G 4, and is charged with the regenerative power from the sub M/G 4. The 48 V battery 30 is connected to the high-voltage battery 20 via the DC/DC converter 50, and is charged with the electric power supplied from the high-voltage battery 20. The 48 V battery 30 is connected to the 12 V battery 40 via the DC/DC converter 50, and supplies electric power to the 12 V battery 40.

The 12 V battery 40 is a storage battery for charging and discharging electric power, and has a different supply voltage from that of the high-voltage battery 20 and the 48 V battery 30. For example, the supply voltage of the 12 V battery 40 is lower than that of the high-voltage battery 20 and the 48 V battery 30. For example, the supply voltage of the 12 V battery 40 is about 12 V. The 12 V battery 40 is connected to the ECUs 5, and supplies electric power to the ECUs 5. The 12 V battery 40 is connected to the solar panel 10, and is charged with the electric power supplied from the solar panel 10. The 12 V battery 40 is connected to the high-voltage battery 20 via the DC/DC converter 50, is charged with the electric power supplied from the high-voltage battery 20, and supplies electric power to the high-voltage battery 20. The 12 V battery 40 is connected to the 48 V battery 30 via the DC/DC converter 50, and is charged with the electric power supplied from the 48 V battery 30.

The DC/DC converter 50 is a converter for converting direct current voltage. The DC/DC converter 50 converts the supply voltage supplied from one of the batteries of the high-voltage battery 20, the 48 V battery 30, and the 12 V battery 40, and outputs the converted voltage to the other battery of the high-voltage battery 20, the 48 V battery 30, or the 12 V battery 40. For example, the DC/DC converter 50 is provided between the high-voltage battery 20 and the 48 V battery 30, steps down the supply voltage output from the high-voltage battery 20, and outputs the stepped-down voltage to the 48 V battery 30. The DC/DC converter 50 is provided between the high-voltage battery 20 and the 12 V battery 40, steps down the supply voltage output from the high-voltage battery 20, and outputs the stepped-down voltage to the 12 V battery 40. The DC/DC converter 50 also steps up the supply voltage output from the 12 V battery 40, and outputs the stepped-up voltage to the high-voltage battery 20. The DC/DC converter 50 is provided between the 48 V battery 30 and the 12 V battery 40, steps down the supply voltage output from the 48 V battery 30, and outputs the stepped-down voltage to the 12 V battery 40.

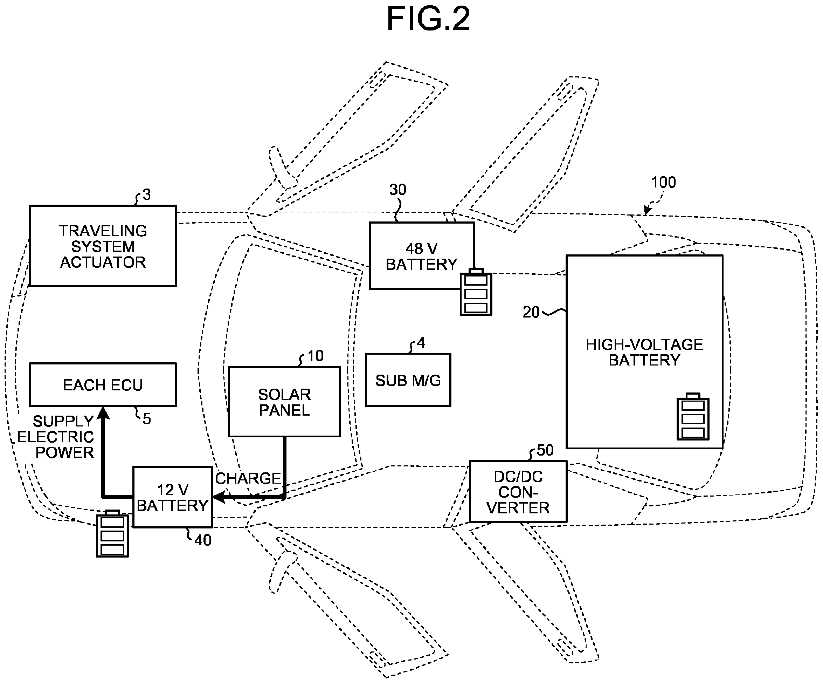

Next, an operation example of the multi-power supply system 1 will be described. FIG. 2 is a diagram illustrating an operation example of the multi-power supply system 1 according to the embodiment when the vehicle 100 is started. As illustrated in FIG. 2, in the multi-power supply system 1, the solar panel 10 photoelectrically converts the light energy of the sun to electric energy (electric power), supplies the electric power having been photoelectrically converted to the 12 V battery 40, and charges the 12 V battery 40. The 12 V battery 40 supplies electric power to the ECUs 5 that control the vehicle 100, when the vehicle 100 is started. The ECUs 5 are operated by the electric power supplied from the 12 V battery 40.

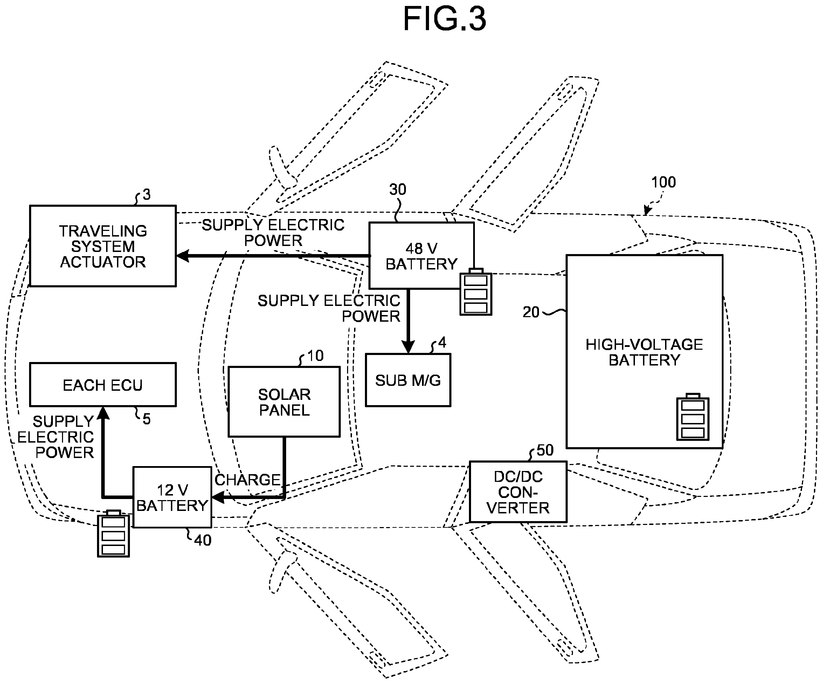

FIG. 3 is a diagram illustrating an operation example of the multi-power supply system 1 according to the embodiment when the vehicle 100 is accelerated. The high-voltage battery 20 supplies electric power to the main M/G 2, in the process from when the vehicle 100 is started to when the vehicle 100 is accelerated. When electric power is supplied, the main M/G 2 drives the driving wheel of the vehicle 100, and accelerates the vehicle 100. As illustrated in FIG. 3, when the vehicle 100 is accelerated, the 48 V battery 30 supplies electric power to the sub M/G 4 and the traveling system actuator 3. When the electric power is supplied, the sub M/G 4 drives the driving wheel of the vehicle 100, and assists (supports) the acceleration of the vehicle 100. For example, when electric power is supplied, the traveling system actuator 3 supports the steering force by the electric power steering, and stabilizes the behavior of the vehicle 100 during the acceleration by the electric stabilizer. When the vehicle 100 is accelerated, the solar panel 10 supplies the generated electric power to the 12 V battery 40. The 12 V battery 40 supplies electric power to the ECUs 5 of the vehicle 100.

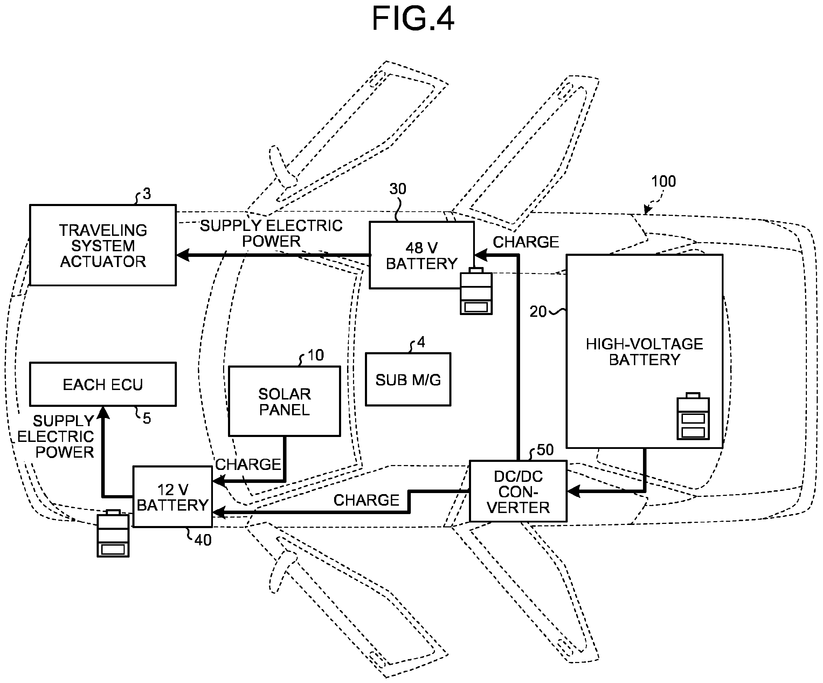

FIG. 4 is a diagram illustrating an operation example of the multi-power supply system 1 according to the embodiment when the vehicle 100 is traveling at a constant speed. When the vehicle 100 is traveling at a constant speed after the acceleration, the high-voltage battery 20 supplies electric power to the 48 V battery 30, the 12 V battery 40, and the main M/G 2. For example, as illustrated in FIG. 4, the high-voltage battery 20 supplies electric power to the 48 V battery 30 and the 12 V battery 40 via the DC/DC converter 50, and charges the batteries. The 48 V battery 30 supplies electric power to the traveling system actuator 3, and does not supply electric power to the sub M/G 4. The 12 V battery 40 supplies electric power to the ECUs 5.

When the electric power is supplied from the high-voltage battery 20, the main M/G 2 drives the driving wheel of the vehicle 100, and causes the vehicle 100 to travel at a constant speed. For example, when the electric power is supplied from the 48 V battery 30, the traveling system actuator 3 supports the steering force by the electric power steering, and stabilizes the behavior of the vehicle 100 during the acceleration by the electric stabilizer. It is to be noted that the solar panel 10 supplies the generated electric power to the 12 V battery 40, when the vehicle 100 is traveling at a constant speed. The 12 V battery 40 supplies electric power to the ECUs 5 of the vehicle 100.

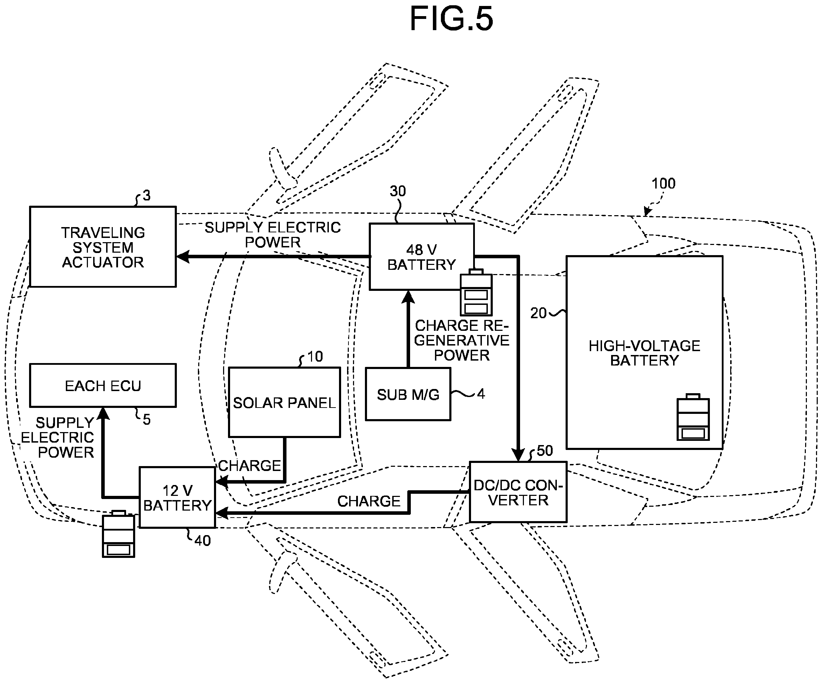

FIG. 5 is a diagram illustrating an operation example of the multi-power supply system 1 according to the embodiment when the vehicle 100 is decelerated. The main M/G 2 converts the rotation energy of the driving wheel of the vehicle 100 to electric energy (regenerative power) when the vehicle 100 is decelerated, and supplies the regenerative power to the high-voltage battery 20. The high-voltage battery 20 is charged with the regenerative power supplied from the main M/G 2. As illustrated in FIG. 5, the sub M/G 4 converts the rotation energy of the driving wheel of the vehicle 100 to electric energy (regenerative power) when the vehicle 100 is decelerated, and supplies the regenerative power to the 48 V battery 30. The 48 V battery 30 is charged with the regenerative power supplied from the sub M/G 4. The 48 V battery 30 supplies electric power to the traveling system actuator 3, and supplies electric power to the 12 V battery 40 via the DC/DC converter 50. The 12 V battery 40 is charged with the electric power supplied from the 48 V battery 30, and supplies electric power to the ECUs 5. It is to be noted that during the deceleration of the vehicle 100, the solar panel 10 supplies the generated electric power to the 12 V battery 40. The 12 V battery 40 supplies electric power to the ECUs 5 of the vehicle 100.

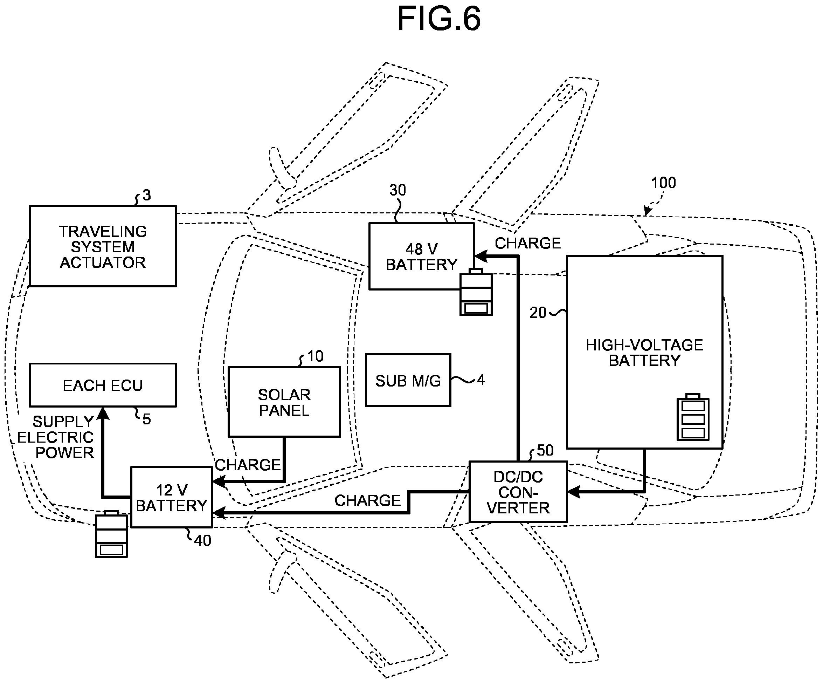

FIG. 6 is a diagram illustrating an operation example of the multi-power supply system 1 according to the embodiment when the vehicle 100 is stopped. As illustrated in FIG. 6, during stopping when the vehicle 100 is temporarily stopped such as at a traffic light, the high-voltage battery 20 supplies electric power to the 48 V battery 30 and the 12 V battery 40 via the DC/DC converter 50, and charges the batteries. The 12 V battery 40 supplies electric power to the ECUs 5. The 48 V battery 30 does not supply electric power to the traveling system actuator 3 when the vehicle 100 is stopped. When the vehicle 100 is stopped, the solar panel 10 supplies the generated electric power to the 12 V battery 40. The 12 V battery 40 supplies electric power to the ECUs 5 of the vehicle 100.

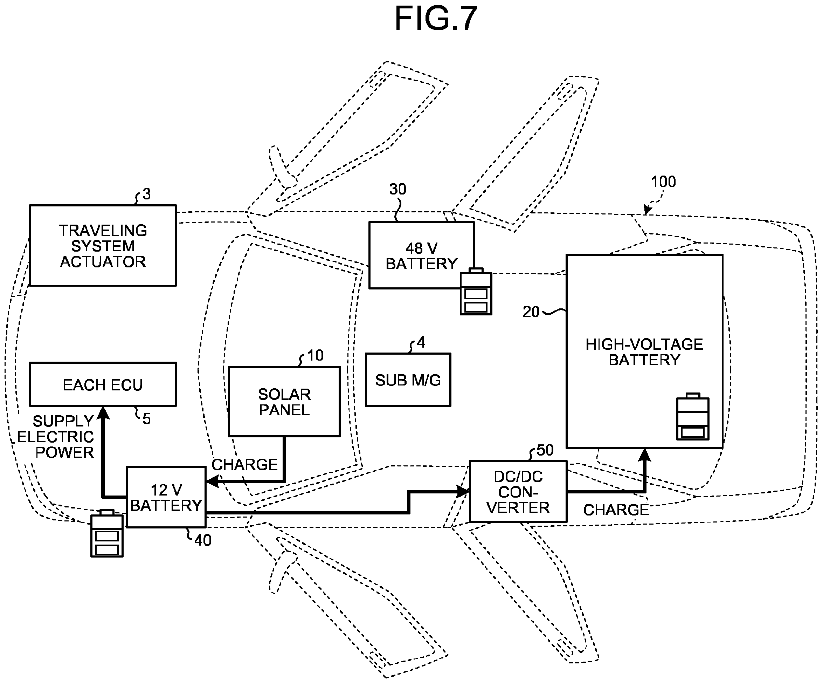

FIG. 7 is a diagram illustrating an operation example of the multi-power supply system 1 according to the embodiment when the vehicle 100 is parked (without being externally charged). As illustrated in FIG. 7, the solar panel 10 photoelectrically converts the light energy of the sun to electric energy (electric power). The solar panel 10 then supplies the electric power having been photoelectrically converted to the 12 V battery 40, and charges the 12 V battery 40. During parking when the vehicle 100 is parked without being charged by an external charging device (not illustrated), the 12 V battery 40 supplies electric power to the ECUs 5. Moreover, when the vehicle 100 is parked, the 12 V battery 40 supplies electric power to the high-voltage battery 20 via the DC/DC converter 50, and charges the high-voltage battery 20.

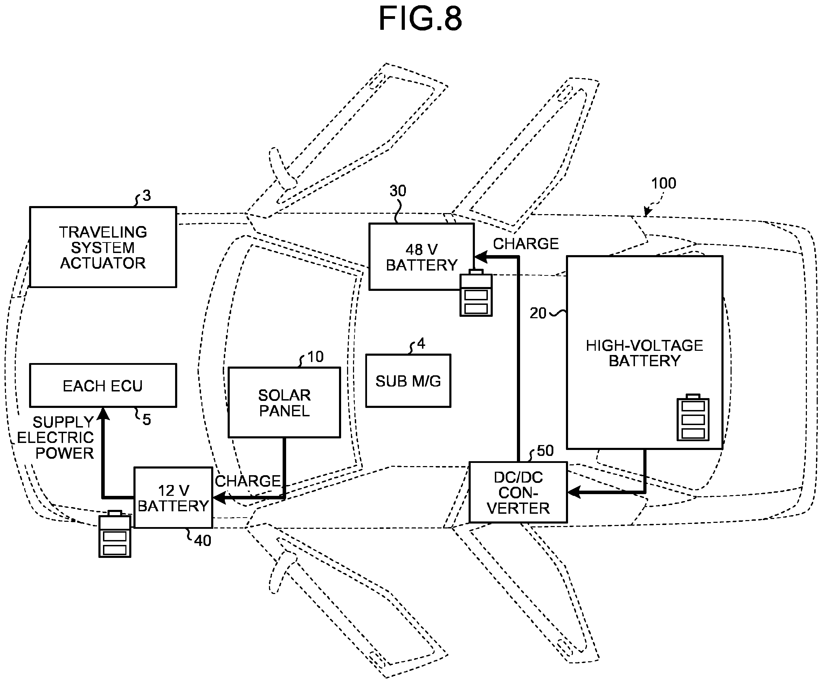

FIG. 8 is a diagram illustrating an operation example of the multi-power supply system 1 according to the embodiment when the vehicle 100 is parked (while being externally charged). The external charging device is connected to the high-voltage battery 20 of the vehicle 100 being parked, and supplies electric power to the high-voltage battery 20. The high-voltage battery 20 is charged with the electric power supplied from the external charging device. The high-voltage battery 20 supplies electric power to the 48 V battery 30 via the DC/DC converter 50, and charges the 48 V battery 30. It is to be noted that when the vehicle 100 is parked (while being externally charged), the solar panel 10 supplies the generated electric power to the 12 V battery 40. The 12 V battery 40 supplies electric power to the ECUs 5 of the vehicle 100.

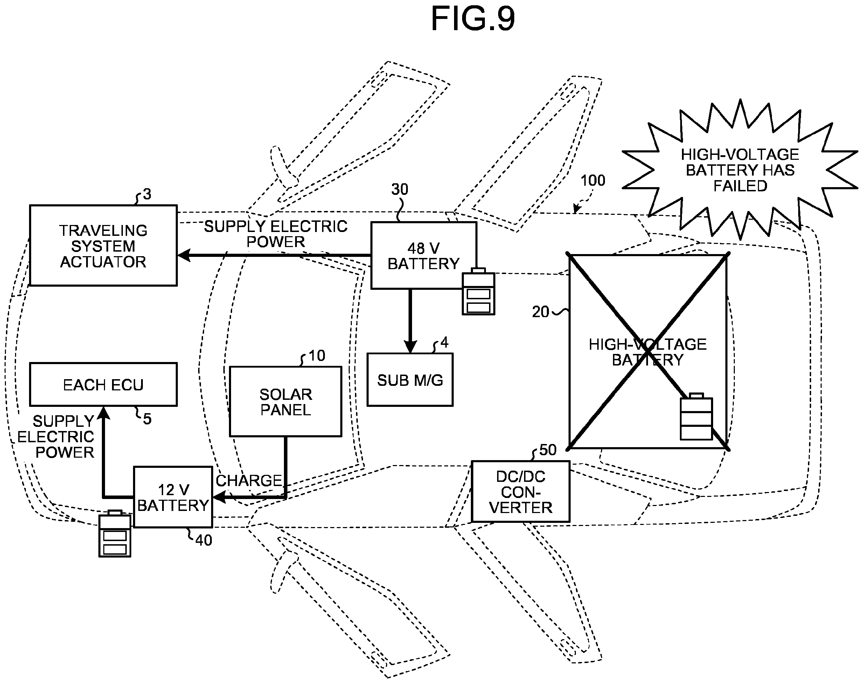

FIG. 9 is a diagram illustrating an operation example of the multi-power supply system 1 according to the embodiment when the high-voltage battery 20 is abnormal. When there is no abnormality in the high-voltage battery 20 while the vehicle 100 is traveling at a constant speed, the 48 V battery 30 supplies electric power to the traveling system actuator 3, and does not supply electric power to the sub M/G 4. On the other hand, as illustrated in FIG. 9, when there is an abnormality in the high-voltage battery 20 while the vehicle 100 is traveling at a constant speed and the high-voltage battery 20 has failed, the 48 V battery 30 supplies electric power to the traveling system actuator 3 and the sub M/G 4. The sub M/G 4 is driven and rotated by the electric power supplied from the 48 V battery 30, drives the driving wheel connected to the drive shaft, and causes the vehicle 100 to travel. The traveling system actuator 3 supports the steering force by the electric power steering, stabilizes the behavior of the vehicle 100 during the acceleration by the electric stabilizer, and adjusts the behavior of the vehicle 100 while traveling. Consequently, even when there is an abnormality in the high-voltage battery 20, and the main M/G 2 cannot be driven while the vehicle 100 is traveling at a constant speed, the multi-power supply system 1 can allow the vehicle 100 to travel in an emergency mode, and move the vehicle 100 to a safe location.

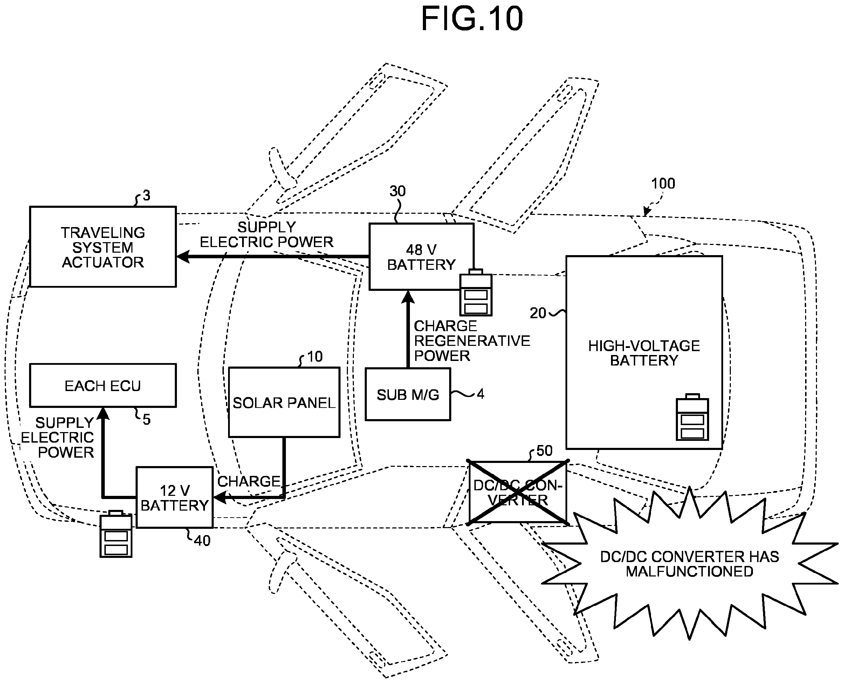

FIG. 10 is a diagram illustrating an operation example of the multi-power supply system 1 according to the embodiment when the DC/DC converter 50 is abnormal. When there is no abnormality in the DC/DC converter 50, the 48 V battery 30 is charged with the regenerative power supplied from the sub M/G 4, and supplies electric power to the 12 V battery 40 via the DC/DC converter 50. On the other hand, as illustrated in FIG. 10, when there is an abnormality in the DC/DC converter 50, and the DC/DC converter 50 has malfunctioned, the 48 V battery 30 is charged with the regenerative power supplied from the sub M/G 4, and does not supply electric power to the 12 V battery 40 via the DC/DC converter 50. When there is an abnormality in the DC/DC converter 50, the high-voltage battery 20 does not supply electric power to the 48 V battery 30 and the 12 V battery 40 via the DC/DC converter 50. When there is an abnormality in the DC/DC converter 50, the 12 V battery 40 does not supply electric power to the high-voltage battery 20 via the DC/DC converter 50. In this example, the main M/G 2 supplies the regenerative power to the high-voltage battery 20, the sub M/G 4 supplies the regenerative power to the 48 V battery 30, and the solar panel 10 supplies the generated electric power to the 12 V battery 40. Consequently, in the multi-power supply system 1, even when there is an abnormality in the DC/DC converter 50, and the batteries 20, 30, and 40 cannot supply electric power to each other, the batteries 20, 30, and 40 can supply electric power to the loading units to some extent. Thus, the multi-power supply system 1 can suppress the batteries 20, 30, and 40 from being insufficiently charged, when there is an abnormality in the DC/DC converter 50.

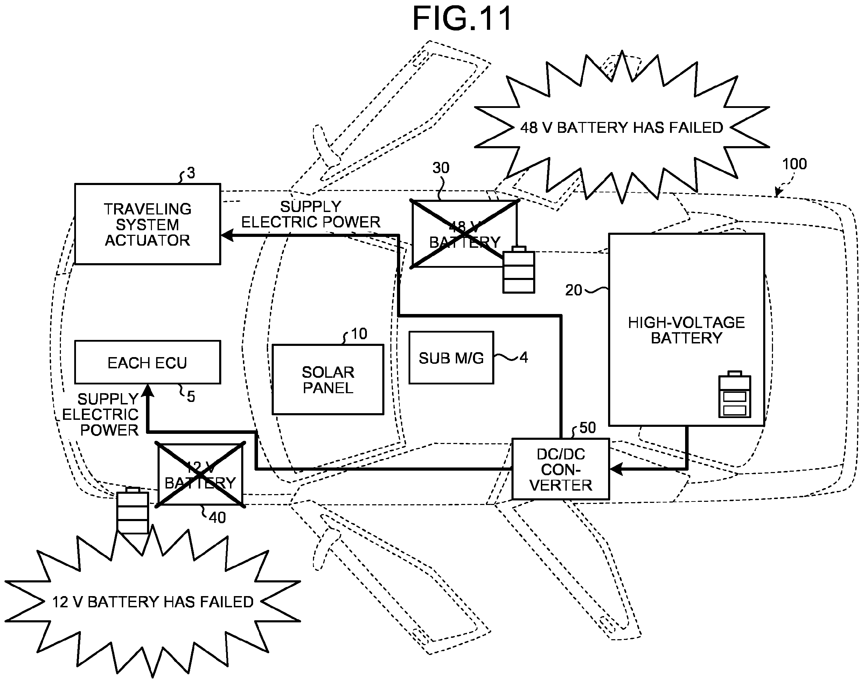

FIG. 11 is a diagram illustrating an operation example of the multi-power supply system 1 according to the embodiment, when the 48 V battery 30 and the 12 V battery 40 are abnormal. When there is no abnormality in the 48 V battery 30, the high-voltage battery 20 does not supply electric power to the traveling system actuator 3. On the other hand, when there is an abnormality in the 48 V battery 30, and the 48 V battery 30 has failed, the high-voltage battery 20 supplies electric power to the traveling system actuator 3 via the DC/DC converter 50. When there is no abnormality in the 12 V battery 40, the high-voltage battery 20 does not supply electric power to the ECUs 5. On the other hand, when there is an abnormality in the 12 V battery 40, and the 12 V battery 40 has failed, the high-voltage battery 20 supplies electric power to the ECUs 5 via the DC/DC converter 50.

In this manner, the multi-power supply system 1 according to the embodiment includes the high-voltage battery 20, the 48 V battery 30, the 12 V battery 40, and the DC/DC converter 50. The high-voltage battery 20 supplies electric power to the main M/G 2 that generates a driving force for causing the vehicle 100 to travel. The 48 V battery 30 is a battery with a different voltage from that of the high-voltage battery 20. The 48 V battery 30 supplies electric power to the traveling system actuator 3 that is different from the main M/G 2 and that adjusts the behavior of the vehicle 100 while traveling. The 12 V battery 40 is a battery with a different voltage from that of the high-voltage battery 20 and the 48 V battery 30. The 12 V battery 40 supplies electric power to the ECUs 5 the driving voltage of which is lower than that of the traveling system actuator 3. The DC/DC converter 50 converts the voltage supplied from one of the batteries of the high-voltage battery 20, the 48 V battery 30, and the 12 V battery 40, and outputs the converted voltage to the other battery of the high-voltage battery 20, the 48 V battery 30, or the 12 V battery 40. The supply voltage of the 48 V battery 30 is lower than that of the high-voltage battery 20, and higher than that of the 12 V battery 40.

With this configuration, in the multi-power supply system 1, electric power is supplied to the traveling system actuator 3 by using the 48 V battery 30. Consequently, it is possible to increase the voltage of the electric power supplied to the traveling system actuator 3 higher than that of the battery of each of the ECUs 5. Thus, the multi-power supply system 1 can reduce the amount of current flowing in the electric wire of the wire harness connected to the traveling system actuator 3. Thus, the multi-power supply system 1 can narrow the electric wire of the wire harness compared with that of a conventional wire harness. Hence, it is possible to reduce the weight of the wire harness, and reduce the weight of the vehicle 100. Moreover, because the multi-power supply system 1 can reduce the amount of current flowing in the electric wire of the wire harness, it is possible to suppress the conduction loss. Thus, the multi-power supply system 1 can increase the cruising distance of the vehicle 100. Furthermore, because the multi-power supply system 1 can supply electric power to the traveling system actuator 3 at a high voltage, it is possible to supply electric power with stable voltage to the traveling system actuator 3. Still furthermore, because the multi-power supply system 1 can construct a power supply system of the 48 V battery 30 by using a conventional power supply system, it is possible to relatively shorten the developing period. Thus, it is possible to suppress the development cost. Still furthermore, the multi-power supply system 1 can supply electric power of the intermediate voltage (48 V) and the low voltage (12 V) at the same time. As a result, the multi-power supply system 1 can suitably configure a plurality of the power supply systems with different voltages.

In the multi-power supply system 1 described above, the 48 V battery 30 supplies electric power to the sub M/G 4 that is different from the traveling system actuator 3, that is a driving force generation source for generating a driving force for causing the vehicle 100 to travel, and the driving voltage of which for driving the vehicle 100 is lower than that of the main M/G 2. With this configuration, the multi-power supply system 1 can support the vehicle 100 to travel through the sub M/G 4.

In the multi-power supply system 1 described above, when there is no abnormality in the high-voltage battery 20, the 48 V battery 30 does not supply electric power to the sub M/G 4. On the other hand, when there is an abnormality in the high-voltage battery 20, the 48 V battery 30 supplies electric power to the sub M/G 4. With this configuration, even when there is an abnormality in the high-voltage battery 20 while the vehicle 100 is traveling at a constant speed, the multi-power supply system 1 can allow the vehicle 100 to travel in an emergency mode, and move the vehicle 100 to a safe location.

In the multi-power supply system 1 described above, the sub M/G 4 can supply the regenerative power that is obtained by converting the rotation energy of the driving wheel of the vehicle 100 to electric energy when the vehicle 100 is decelerated. When there is no abnormality in the DC/DC converter 50, the 48 V battery 30 charges the 48 V battery 30 with the regenerative power supplied from the sub M/G 4, and supplies electric power to the 12 V battery 40 via the DC/DC converter 50. On the other hand, when there is an abnormality in the DC/DC converter 50, the 48 V battery 30 charges the 48 V battery 30 with the regenerative power supplied from the sub M/G 4, and does not supply electric power to the 12 V battery 40 via the DC/DC converter 50. With this configuration, the multi-power supply system 1 can supply the regenerative power charged to the 48 V battery 30, to the 12 V battery 40.

In the multi-power supply system 1 described above, when there is no abnormality in the 48 V battery 30, the high-voltage battery 20 does not supply electric power to the traveling system actuator 3, and when there is an abnormality in the 48 V battery 30, the high-voltage battery 20 supplies electric power to the traveling system actuator 3 via the DC/DC converter 50. When there is no abnormality in the 12 V battery 40, the high-voltage battery 20 does not supply electric power to the ECUs 5, and when there is an abnormality in the 12 V battery 40, the high-voltage battery 20 supplies electric power to the ECUs 5 via the DC/DC converter 50. With this configuration, even when there is an abnormality in the 48 V battery 30, the multi-power supply system 1 can operate the traveling system actuator 3. Moreover, even when there is an abnormality in the 12 V battery 40, the multi-power supply system 1 can also operate the ECUs 5.

In the multi-power supply system 1 described above, when there is an abnormality in the high-voltage battery 20, the traveling system actuator 3 can allow the vehicle 100 to travel a certain distance while adjusting the behavior of the vehicle 100 while traveling, and can stop the vehicle 100 thereafter. With this configuration, the multi-power supply system 1 can supply electric power to the traveling system actuator 3 when the high-voltage battery 20 is abnormal, and move the vehicle 100 to a safe location.

### Modifications

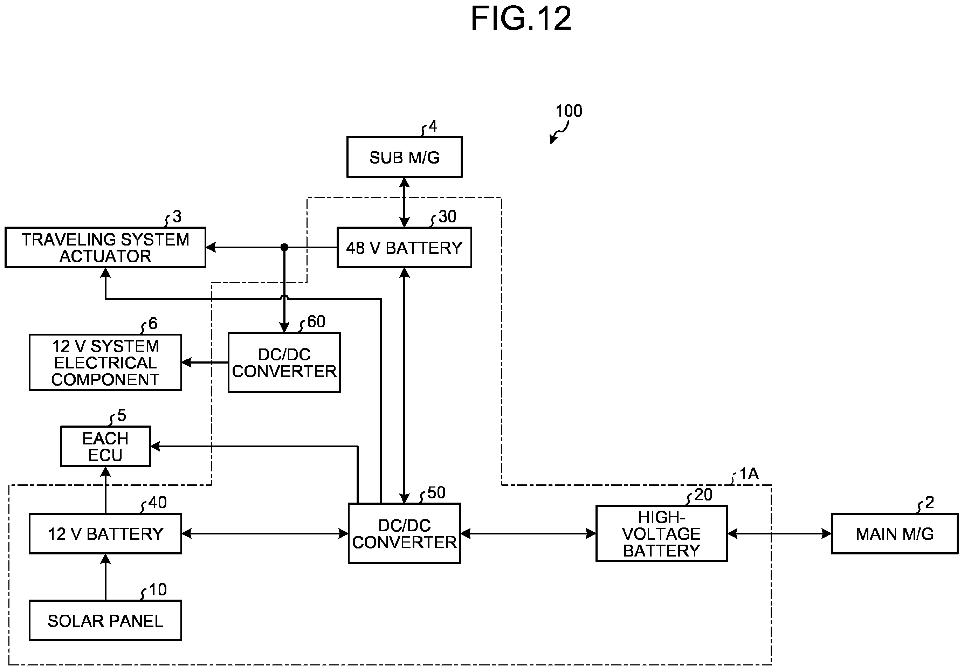

Next, a first modification and a second modification of the embodiment will be described. In the first modification and the second modification, the same reference numerals denote the same components as those in the embodiment, and the detailed description thereof will be omitted. FIG. 12 is a block diagram illustrating a configuration example of a multi-power supply system 1A according to the first modification of the embodiment. The multi-power supply system 1A is different from the multi-power supply system 1 according to the embodiment in supplying electric power to a 12 V system electrical component 6 via a DC/DC converter 60.

The vehicle 100 includes the main M/G 2, the traveling system actuator 3, the sub M/G 4, the ECUs 5, and the 12 V system electrical component 6. For example, the 12 V system electrical component 6 is an electrical component for executing an automatic operation function, and the ECUs 5 are electrical components for executing the functions other than the automatic operation function. The 12 V system electrical component 6 requires higher reliability than that of the ECUs 5.

The multi-power supply system 1A includes the solar panel 10, the high-voltage battery 20, the 48 V battery 30, the 12 V battery 40, the DC/DC converter 50, and the DC/DC converter 60. The 12 V battery 40 is connected to the ECUs 5, and supplies electric power to the ECUs 5. The DC/DC converter 60 is connected to the 48 V battery 30 and the 12 V system electrical component 6, steps down the voltage of the electric power supplied from the 48 V battery 30, and supplies the electric power the voltage of which is stepped down to the 12 V system electrical component 6.

In this manner, in the multi-power supply system 1A, the electric power supplied from the 48 V battery 30 is supplied to the 12 V system electrical component 6, after the voltage of the electric power is stepped down by the DC/DC converter 60. Consequently, compared with when the electric power is supplied to the 12 V system electrical component 6 from the 12 V battery 40, it is possible to supply the electric power with stable voltage. Consequently, the multi-power supply system 1A can suppress the reliability of the 12 V system electrical component 6 from being lowered. Moreover, in the multi-power supply system 1A, it is possible to narrow the electric wire of the wire harness connected to the 12 V system electrical component 6 compared with that of a conventional wire harness, and reduce the weight of the wire harness. Hence, the multi-power supply system 1A can reduce the weight of the vehicle 100, and increase the cruising distance of the vehicle 100.

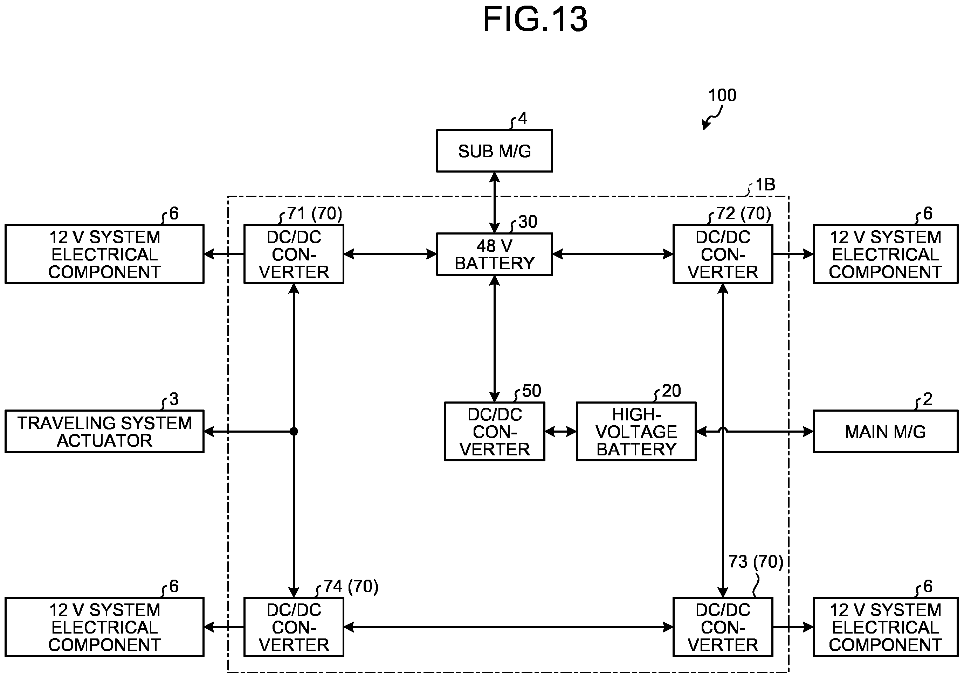

Next, a multi-power supply system 1B according to the second modification of the embodiment will be described. FIG. 13 is a block diagram illustrating a configuration example of the multi-power supply system 1B according to the second modification of the embodiment. The multi-power supply system 1B is different from the multi-power supply system 1 according to the embodiment in annularly connecting a DC/DC converter 70 (71 to 74) to which the 12 V system electrical component 6 is connected.

The vehicle 100 includes the main M/G 2, the traveling system actuator 3, the sub M/G 4, and a plurality of the 12 V system electrical components 6. For example, each of the 12 V system electrical components 6 is an electrical component for executing the automatic operation function, and requires a high reliability.

The multi-power supply system 1B includes the high-voltage battery 20, the 48 V battery 30, the DC/DC converter 50, and a plurality of the DC/DC converters 71 to 74. The DC/DC converters 71 to 74 are connected in an annular shape (ring shape). Each of the DC/DC converters 71 to 74 is connected to two adjacent DC/DC converters 71 to 74. More specifically, the DC/DC converter 71 is connected to the DC/DC converters 72 and 74, the DC/DC converter 72 is connected to the DC/DC converters 71 and 73, the DC/DC converter 73 is connected to the DC/DC converters 72 and 74, and the DC/DC converter 74 is connected to the DC/DC converters 71 and 73. The 12 V system electrical component 6 is connected to each of the DC/DC converters 71 to 74. The 48 V battery 30 is provided between the DC/DC converter 71 and the DC/DC converter 72, and supplies electric power to the 12 V system electrical component 6 via each of the DC/DC converters 71 to 74.

In this manner, in the multi-power supply system 1B according to the second modification, a plurality of the DC/DC converters 71 to 74 are provided. The DC/DC converters 71 to 74 are connected in an annular shape, and the 12 V system electrical component 6 is connected to each of the DC/DC converters 71 to 74. The 48 V battery 30 supplies electric power to the 12 V system electrical component 6 via each of the DC/DC converters 71 to 74. With this configuration, in the multi-power supply system 1B, even when the wire harness that connects between the DC/DC converters 71 to 74 is partially disconnected and the current path is partially interrupted, it is possible to supply electric power to the 12 V system electrical components 6 via each of the DC/DC converters 71 to 74 through a different current path. Consequently, the multi-power supply system 1B can improve durability (fault tolerance) against obstacle.

In the example described above, the 48 V battery 30 supplies electric power to the sub M/G 4. However, it is not limited thereto, and the 48 V battery 30 does not necessarily have to supply electric power to the sub M/G 4.

In the example described above, when there is no abnormality in the high-voltage battery 20 while the vehicle 100 is traveling at a constant speed, the 48 V battery 30 does not supply electric power to the sub M/G 4. However, it is not limited thereto, and the 48 V battery 30 may supply electric power to the sub M/G 4.

In the example described above, when there is no abnormality in the DC/DC converter 50 while the vehicle 100 is decelerated, the 48 V battery 30 supplies electric power to the 12 V battery 40 via the DC/DC converter 50. However, it is not limited thereto, and the 48 V battery 30 does not necessarily have to supply electric power to the 12 V battery 40 via the DC/DC converter 50.

In the example described above, the traveling system actuator 3 includes the electric stabilizer, the electric power steering, the electric brake, and the like. However, it is not limited thereto, and the traveling system actuator 3 may also include other pieces of equipment.

The power supply system according to the embodiment supplies electric power to the traveling system actuator from the second power supply system the supply voltage of which is lower than that of the first power supply system and higher than that of the third power supply system. Consequently, it is possible to narrow the electric wire of the wire harness connected to the traveling system actuator compared with that of a conventional wire harness. Thus, it is possible to reduce the weight of the wire harness. As a result, the power supply system can suitably configure a plurality of the power supply systems with different voltages.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power supply system (1, 1A, 1B), comprising:
a first power supply system (20) that supplies electric power to a main driving force generation source (2) that generates a driving force for causing a vehicle (100) to travel;
a second power supply system (30) that is a power supply system with a different voltage from that of the first power supply system (20), and that supplies electric power to a traveling system actuator (3) being different from the main driving force generation source (2) and configured to adjust behavior of the vehicle (100) while traveling;
a third power supply system (40) that is a power supply system with a different voltage from that of the first power supply system (20) and the second power supply system (30), and that supplies electric power to an electric component (5, 6) a driving voltage of which is lower than that of the traveling system actuator (3); and
a DC/DC converter (50, 60, 70) that converts voltage supplied from one power supply system of the first power supply system (20), the second power supply system (30), and the third power supply system (40), and that outputs the converted voltage to another power supply system of the first power supply system (20), the second power supply system (30), and the third power supply system (40), wherein
supply voltage of the second power supply system (30) is lower than that of the first power supply system (20), and higher than that of the third power supply system (40).

2. The power supply system (1, 1A, 1B) according to claim 1, wherein
the second power supply system (30) supplies electric power to a sub-driving force generation source (4) that is different from the traveling system actuator (3), that is a driving force generation source for generating a driving force for causing the vehicle (100) to travel, and a driving voltage of which for driving the vehicle (100) is lower than that of the main driving force generation source (2) .

3. The power supply system (1, 1A, 1B) according to claim 2, wherein
the second power supply system (30) supplies electric power to the sub-driving force generation source (4), when there is an abnormality in the first power supply system (20) .

4. The power supply system (1, 1A, 1B) according to claim 2 or 3, wherein
the sub-driving force generation source (4) is capable of supplying regenerative power obtained by converting rotation energy of a driving wheel of the vehicle (100) to electric energy when the vehicle (100) is decelerated,
when there is no abnormality in the DC/DC converter (50, 60, 70), the second power supply system (30) charges an electrical storage device (30) with the regenerative power supplied from the sub-driving force generation source (4), and supplies electric power to the third power supply system (40) via the DC/DC converter (50, 60, 70), and
when there is an abnormality in the DC/DC converter (50, 60, 70), the second power supply system (30) charges the electrical storage device (30) with the regenerative power supplied from the sub-driving force generation source (4), and does not supply electric power to the third power supply system (40) via the DC/DC converter (50, 60, 70).

5. The power supply system (1, 1A, 1B) according to any one of claims 1 to 4, wherein
when there is no abnormality in the second power supply system (30), the first power supply system (20) does not supply electric power to the traveling system actuator (3), and when there is an abnormality in the second power supply system (30), the first power supply system (20) supplies electric power to the traveling system actuator (3) via the DC/DC converter (50, 60, 70), and
when there is no abnormality in the third power supply system (40), the first power supply system (20) does not supply electric power to the electric component (5, 6), and when there is an abnormality in the third power supply system (40), the first power supply system (20) supplies electric power to the electric component (5, 6) via the DC/DC converter (50, 60, 70).

6. The power supply system (1, 1A, 1B) according to any one of claims 1 to 5, wherein
a plurality of the DC/DC converters (50, 60, 70) are provided,
the DC/DC converters (50, 60, 70) are connected in an annular shape, and the electric component (5, 6) is connected to each of the DC/DC converters (50, 60, 70); and
the second power supply system (30) supplies electric power to the electric component (5, 6) via the DC/DC converter (50, 60, 70).

7. The power supply system (1, 1A, 1B) according to any one of claims 1 to 6, wherein
when there is an abnormality in the first power supply system (20), the traveling system actuator (3) allows the vehicle (100) to travel a certain distance while adjusting behavior of the vehicle (100) while traveling, and is capable of stopping the vehicle (100) thereafter.
